# EUROPEAN PATENT APPLICATION

(11) **EP 4 173 946 A1**
(43) Date of publication of application: **03.05.2023**
(21) Application number: 21828584.9
(22) Date of filing: 25.06.2021
(51) Int. Cl.: B64C 13/08, G09B 9/28, G09B 9/46, G05G 5/03, G05G 5/05

(54) **FLIGHT SIMULATOR**

(30) Priority: 26.06.2020 JP 2020110968
(71) Applicant: KAWASAKI JUKOGYO KABUSHIKI KAISHA, Kobe-shi, Hyogo 650-8670 (JP)
(72) Inventor: KOMATSU, Seiji, Kobe-Shi, Hyogo 6508670 (JP); MURATA, Yoshio, Kobe-Shi, Hyogo 6508670 (JP); KOBAYASHI, Takumi, Kobe-Shi, Hyogo 6508670 (JP); KURACHI, Osamu, Kobe-Shi, Hyogo 6508670 (JP); NISHIMURA, Hirofumi, Kobe-Shi, Hyogo 6508670 (JP); SHIMIZU, Yuichi, Kobe-Shi, Hyogo 6508670 (JP); KAWABE, Yuji, Kobe-Shi, Hyogo 6508670 (JP); KONDO, Hiroki, Kobe-Shi, Hyogo 6508670 (JP); SHINKAI, Soma, Kobe-Shi, Hyogo 6508670 (JP)
(74) Representative: Puschmann Borchert Kaiser Klettner Patentanwälte Partnerschaft mbB
(86) International application number: PCT/JP2021/024240
(87) International publication number: WO 2021/261596

(57) **Abstract**

A simulator 100 includes a housing 1, the housing 1 containing: a control stick 10 having a first control member 12 rotatable about a first rotation shaft 14 and a second control device 13 rotatable about a second rotation shaft 15 located below the first rotation shaft 14 and perpendicular to the first rotation shaft 14; a first reaction force generator 20 having a spring 22 displaced by rotation of the first control member 12 to generate a reaction force to an operation of the first control member 12; a second reaction force generator 50 having a spring 52 displaced by rotation of the second control member 13 to generate a reaction force to an operation of the second control member 13; a motor 31 that displaces the spring 22 to reduce the reaction force to the operation of the first control member 12 to zero to change a neutral position of the first control member 12; and a motor 61 that displaces the spring 52 to reduce the reaction force to the operation of the second control member 13 to zero to change a neutral position of the second control member 13. An output shaft 32 of the motor 31 is located below the first reaction force generator 20, and an output shaft 62 of the motor 61 is located above the second reaction force generator 50.

## Description

### TECHNICAL FIELD

The present application relates to a flight simulation control apparatus.

### BACKGROUND ART

A flight control device having the function of changing a neutral position of a control stick (what is called a trim position) has been known. For example, a flight control device disclosed by Patent Document 1 includes a spring member having one end that is displaced by angular displacement of the control stick to generate a reaction force to the angular displacement, and a neutral position changer (a back drive mechanism) that displaces the other end of the spring member so that the spring member has an equilibrium length to change the neutral position of the control stick.

The neutral position changer has a motor and an electromagnetic brake. When the motor is driven to rotate, the neutral position changer displaces the other end of the spring member. The neutral position changer allows the other end of the spring member to be displaced under a restoring force of the spring member when the electromagnetic brake frees the other end of the spring member.

### CITATION LIST

### PATENT DOCUMENT

PATENT DOCUMENT 1: Japanese Patent No. 3091743

### SUMMARY OF THE INVENTION

If the flight control device described above is configured as a flight simulation control apparatus for simulated training, components such as part of the control stick, the spring member, a member connecting the spring member and the control stick, and the neutral position changer may be contained in a housing on top of which a cockpit is mounted. In this case, the motor and the electromagnetic brake are relatively large in size, and may require the larger housing depending on how the motor and the electromagnetic brake are arranged.

Under these circumstances, the technique disclosed in the present application has been achieved to downsize a flight simulation control apparatus

A flight simulation control apparatus disclosed in the present application includes a housing, the housing containing: a control stick; a first reaction force generator; a second reaction force generator; a first neutral position changer; and a second neutral position changer. The control stick has a first control member that extends in a vertical direction and is rotatable about a first horizontal axis and a second control member that extends in the vertical direction and is rotatable about a second horizontal axis located below the first horizontal axis and perpendicular to the first horizontal axis. The first reaction force generator has a first spring that is connected to the first control member and is displaced by rotation of the first control member to generate a reaction force to an operation of the first control member. The second reaction force generator has a second spring that is connected to the second control member and is displaced by rotation of the second control member to generate a reaction force to an operation of the second control member. The first neutral position changer has a first actuator that displaces the first spring to reduce the reaction force to the operation of the first control member to zero, thereby changing a neutral position of the first control member. The second neutral position changer has a second actuator that displaces the second spring to reduce the reaction force to the operation of the second control member to zero, thereby changing a neutral position of the second control member. An output shaft of the first actuator is located below the first reaction force generator, and an output shaft of the second actuator is located above the second reaction force generator.

The flight simulation control apparatus described above can be reduced in size.

### BRIEF DESCRIPTION OF THE DRAWINGS

[FIG. 1] FIG. 1 is a left side view illustrating a schematic configuration of a flight simulation control apparatus.
[FIG. 2] FIG. 2 is a plan view illustrating a schematic configuration of the flight simulation control apparatus.
[FIG. 3] FIG. 3 is a rear view illustrating a schematic configuration of the flight simulation control apparatus.
[FIG. 4] FIG. 4 is a rear view schematically illustrating an internal configuration of a housing.
[FIG. 5] FIG. 5 is a plan view schematically illustrating an internal configuration of the housing.
[FIG. 6] FIG. 6 is a left side view schematically illustrating an internal configuration of the housing.
[FIG. 7] FIG. 7 is a plan view illustrating first and second control members of a control stick in an enlarged scale.
[FIG. 8] FIG. 8 is a side view illustrating a schematic configuration of a first reaction force generator and a second reaction force generator.
[FIG. 9] FIG. 9 is a cross-sectional view taken along line A-A in FIG. 8.

### DESCRIPTION OF EMBODIMENTS

Exemplary embodiments will be described in detail below with reference to the drawings. A simulator of the present embodiment is a flight simulation control apparatus, and is used for simulated flight training (for a helicopter in this embodiment) in a VR space, for example. Specifically, a pilot or copilot who is a trainee operates the simulator to fly the aircraft in the VR space.

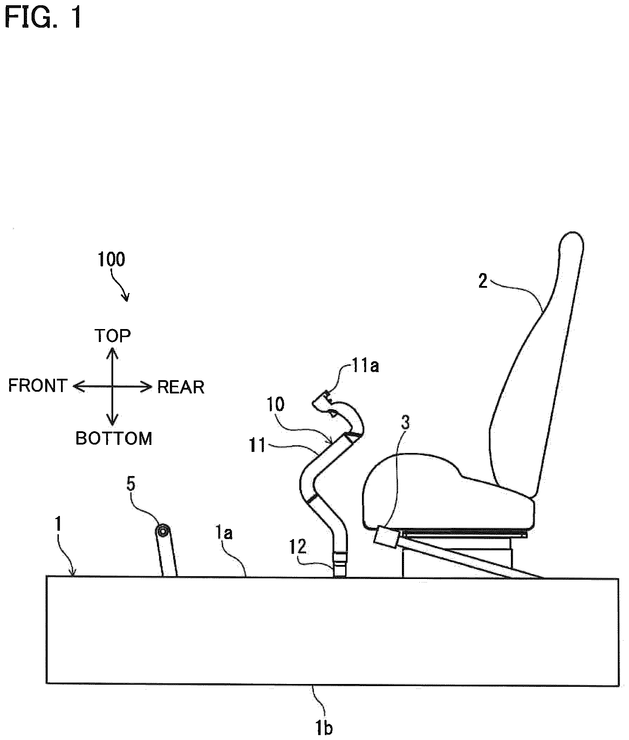

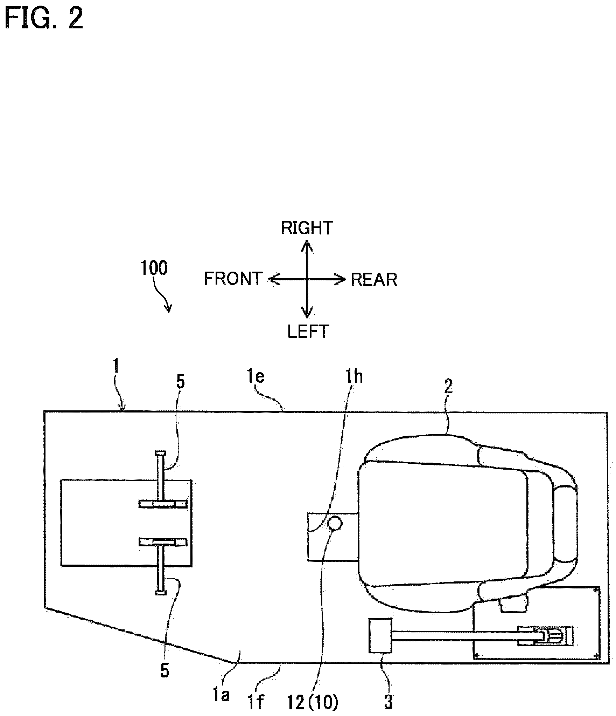

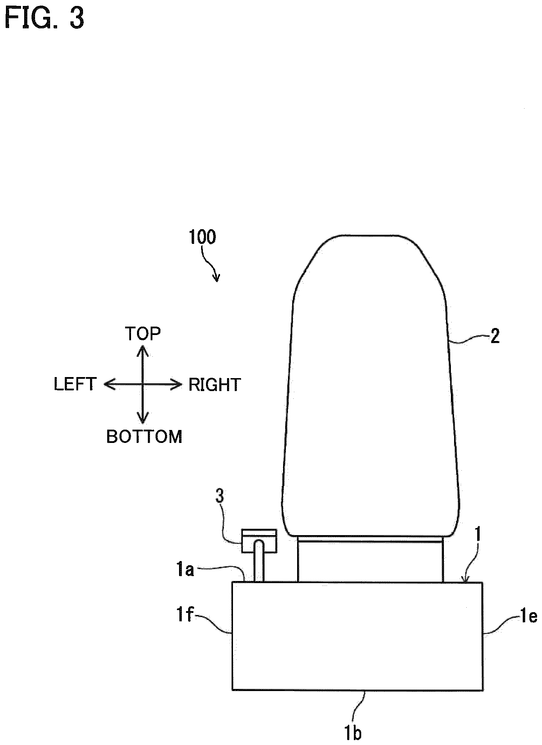

As shown in FIGS. 1 to 3, the simulator 100 has a housing 1. A pilot or copilot who is a trainee takes a seat in a space above the housing 1 to navigate the aircraft. Note that a second control member 13 described later is not shown in FIG. 1, and an operating part 11 and the second control member 13 described later are not shown in FIG. 2.

A seat 2, a collective lever 3, rudder pedals 5, and a control stick 10 are arranged on a top surface (a top plate) of the housing 1.

The seat 2 is for a pilot or copilot as a trainee and is arranged to face forward. The collective lever 3 is arranged, for example, on the left of the seat 2 when viewed from the rear side. When the collective lever 3 is pulled up or pushed down by the pilot or any equivalent operator, an airframe is raised or lowered, or the speed of the airframe is controlled.

The control stick 10 is located in front of the seat 2 between the feet of the pilot or any equivalent operator. The control stick 10 is also known as a cyclic stick, and can be tilted in directions along two axes, namely, to the front, rear, left, and right. When the pilot or any equivalent operator tilts the control stick 10 to the front or rear, a nose of the aircraft moves down or up to lower or raise the airframe. Specifically, the airframe pitches when the control stick 10 is tilted (rotated) to the front or rear. When the pilot or any equivalent operator tilts the control stick 10 to the left or right, the airframe leans (rotates) to the left or right. Specifically, the airframe rolls when the control stick 10 is tilted (rotated) to the left or right.

The rudder pedals 5 are located at the feet of the pilot or any equivalent operator, and include a right rudder pedal and a left rudder pedal. The pilot or any equivalent operator operates the rudder pedals 5 with the feet to turn the airframe to the left or the right. Specifically, the airframe yaws when the rudder pedals 5 are operated.

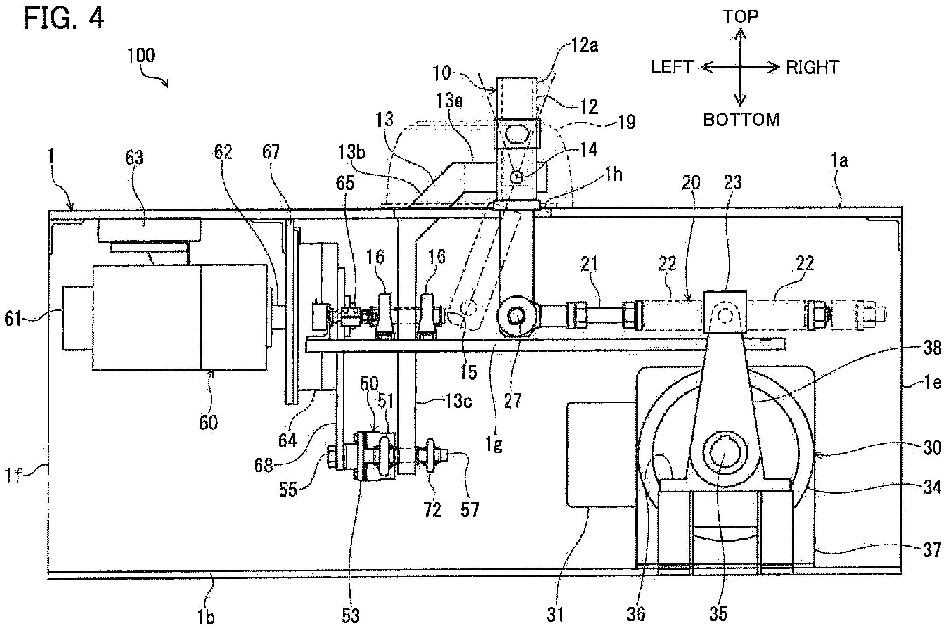

As shown in FIGS. 4 to 6, the simulator 100 includes the housing 1, the control stick 10, a first reaction force generator 20, a first neutral position changer 30, a second reaction force generator 50, and a second neutral position changer 60.

The housing 1 contains the control stick 10, the first reaction force generator 20, the first neutral position changer 30, the second reaction force generator 50, and the second neutral position changer 60. More specifically, part of the control stick 10 is located out of (above) the housing 1.

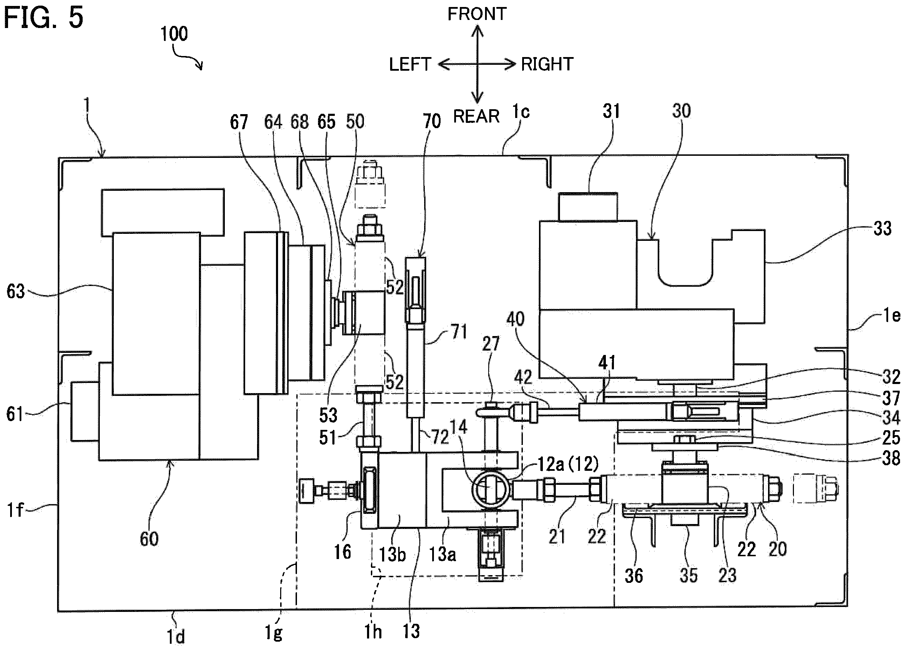

The housing 1 has a top plate 1a and a bottom plate 1b as top and bottom faces (see FIG. 4), and a front plate 1c, a rear plate 1d, a left plate 1f, and a right plate 1e as front, rear, left and right faces (see FIG. 5). The top plate 1a also serves as a floorboard in a space where the pilot or any equivalent operator navigates the aircraft.

The control stick 10 has a first control member 12 and a second control member 13.

The first control member 12 is a shaft member extending in a vertical direction. The first control member 12 is located in an upper portion of the housing 1. Specifically, the first control member 12 penetrates the top plate 1a to extend from the inside to outside of the housing 1. Part of the first control member 12 is in the housing 1, and the other part extends to the space above the housing 1 via an opening 1h of the top plate 1a (see FIG. 4). The first control member 12 is located substantially at the center in the left-right direction of the housing 1 and is closer to the rear face (see FIG. 5).

The first control member 12 has an upper part (a substantially upper half in this embodiment) formed into a cylindrical tubular part 12a, and a lower part (a substantially lower half in this embodiment) formed into a columnar solid part (not shown). In the present embodiment, generally, the solid part of the first control member 12 is in the housing 1, and the tubular part 12a of the first control member 12 is in the space above the housing 1.

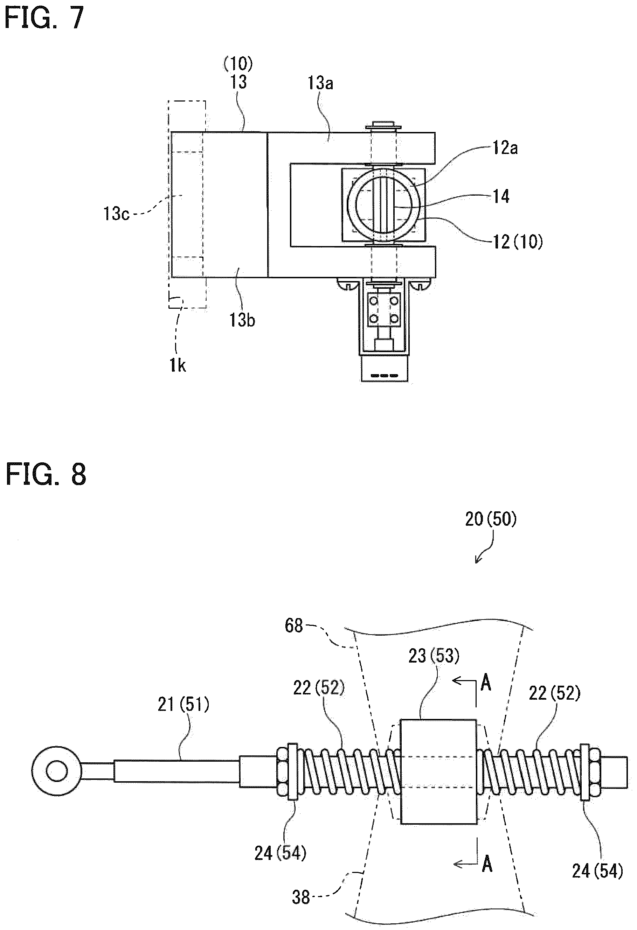

The first control member 12 is rotatable about a first horizontal axis. The first control member 12 has a first rotation shaft 14. The first rotation shaft 14 is a member extending in the front-rear direction and corresponds to the first horizontal axis. As shown in FIG. 7, the first rotation shaft 14 penetrates the first control member 12 and is fixed to the first control member 12. In the present embodiment, the first rotation shaft 14 is provided in the tubular part 12a located outside the housing 1. Thus, the first control member 12 is configured to rotate about the first rotation shaft 14 together with the first rotation shaft 14. That is, the first control member 12 is configured to rotate to the left and right.

The second control member 13 is a shaft member extending in a vertical direction and having a rectangular cross section. Specifically, the second control member 13 includes a horizontal part 13a, an inclined part 13b, and a vertical part 13c that are continuously formed from an upper end. The horizontal part 13a is a bifurcated part extending in the horizontal direction (left-right direction). The inclined part 13b is inclined downward to the left from the horizontal part 13a. The vertical part 13c extends vertically downward from the inclined part 13b. Thus, the vertical part 13c, which is the major part of the second control member 13, extends in the vertical direction. An upper end part (the horizontal part 13a) of the second control member 13 is connected to the first control member 12. More specifically, as shown in FIG. 7, the first rotation shaft 14 is inserted in the horizontal part 13a of the second control member 13 with bearings so that the horizontal part 13a of the second control member 13 is rotatable about the first rotation shaft 14 protruding from the first control member 12. That is, the second control member 13 does not rotate about the first rotation shaft 14 when the first control member 12 rotates together with the first rotation shaft 14.

The second control member 13 penetrates the top plate 1a of the housing 1 to extend from the inside to outside of the housing 1, as does the first control member 12. Part of the second control member 13 is in the housing 1, and the other part extends to the space above the housing 1 via the opening 1h of the top plate 1a (see FIG. 4). In the present embodiment, generally, the vertical part 13c of the second control member 13 is in the housing 1, and the horizontal part 13a and inclined part 13b of the second control member 13 are in the space above the housing 1. The second control member 13 is also located substantially at the center in the left-right direction of the housing 1 and is closer to the rear face (see FIG. 5), as is the first control member 12. A lower end part (the vertical part 13c) of the second control member 13 extends below the lower end of the first control member 12. A floor shaft boot 19 that blocks the opening 1h is provided on the top plate 1a, i.e., the floorboard (see FIG. 4). Note that no floor shaft boot 19 may be provided.

The second control member 13 is rotatable about a second horizontal axis that is located below the first horizontal axis and is perpendicular to the first horizontal axis. The second control member 13 has a second rotation shaft 15. The second rotation shaft 15 is a member extending in the left-right direction and corresponds to the second horizontal axis. That is, the second rotation shaft 15 is a member perpendicular to the first rotation shaft 14. The second rotation shaft 15 is located below the first rotation shaft 14. The second rotation shaft 15 penetrates the vertical part 13c of the second control member 13 and is fixed to the vertical part 13c. The second rotation shaft 15 is arranged coaxially with a rod 21 of the first reaction force generator 20 described later. Both ends of the second rotation shaft 15 are rotatably supported by a bearing unit 16. Thus, the second control member 13 is configured to rotate about the second rotation shaft 15 together with the second rotation shaft 15. That is, the second control member 13 is configured to rotate to the front and rear.

An intermediate plate 1g is arranged in the housing 1. The intermediate plate 1g is a horizontally extending plate located at a level slightly closer to the top plate 1a. The first control member 12 extends to be close to the intermediate plate 1g, and the second control member 13 extends below the intermediate plate 1g through an opening 1k of the intermediate plate 1g (see FIG. 7). The bearing unit 16 is fixed to the intermediate plate 1g.

The control stick 10 further includes an operating part 11 (see FIG. 1). The operating part 11 is a rod-shaped member handled by the pilot or any equivalent operator. A lower end of the operating part 11 is connected to the first control member 12. Specifically, the lower end of the operating part 11 is fitted on an outer periphery of the tubular part 12a of the first control member 12. When the pilot or any equivalent operator tilts the operating part 11 of the control stick 10 to the left or right, the first control member 12 rotates to the left or right. When the pilot or any equivalent operator tilts the operating part 11 of the control stick 10 to the front or rear, the second control member 13 rotates to the front or rear. At this time, the first control member 12 also rotates about the second rotation shaft 15.

The operating part 11 includes an operating switch 11a. The pilot or any equivalent operator uses the operating switch 11a to instruct the first and second neutral position changers 30 and 60, which will be described later, to perform a predetermined change operation.

The first reaction force generator 20 has a first spring that is connected to the first control member 12 and is displaced by rotation of the first control member 12 to generate a reaction force to the operation of the first control member 12. Specifically, as shown in FIG. 8, the first reaction force generator 20 has a rod 21, two springs 22, and a slider 23. The springs 22 correspond to the first spring. FIG. 8 shows the first reaction force generator 20 as viewed from the rear side of the housing 1.

The rod 21 is a first rod that is connected to the first control member 12 and displaces the two springs 22, which are attached to the rod to be displaceable in an axial direction of the rod, by the rotation of the first control member 12. The rod 21 is a linear member extending in the left-right direction. One end of the rod 21 (a left end in FIG. 8) is connected to the lower end of the first control member 12 by a connecting pin 27. The other end of the rod 21 (a right end in FIG. 8) is a free end. The rod 21 of the first reaction force generator 20 is arranged coaxially with the second rotation shaft 15 as described above.

The two springs 22 are fitted on the outer periphery of the rod 21. The two springs 22 are displaceable in the axial direction of the rod 21. That is, the springs 22 of the first reaction force generator 20 are displaced to the left and right. In this embodiment, the two springs 22 are coil springs and compression springs.

The slider 23 is a first slider that is attached to the rod 21 to be movable in the axial direction of the rod 21 (to the left and right). The slider 23 is formed into a substantially rectangular shape and arranged on the outer periphery of the rod 21. The slider 23 is slidable in the axial direction of the rod 21. That is, the rod 21 and the slider 23 are slidable on each other. The slider 23 is located between the two springs 22. The outer shape of the slider 23 is larger than the outer diameter of the springs 22.

The rod 21 has two regulator parts 24 each regulates the position of the spring 22. Each regulator part 24 is formed in an annular shape larger than the outer diameter of the springs 22 and arranged on the outer periphery of the rod 21. Each regulator part 24 is arranged across the corresponding spring 22 from the slider 23. That is, each of the two springs 22 on the rod 21 is sandwiched between the slider 23 and the corresponding regulator part 24. The springs 22, the slider 23, and the regulator parts 24 are not fixed. Each of the two springs 22 of the first reaction force generator 20 is in contact with the slider 23 at one end and the regulator part 24 at the other end. Specifically, when no force other than the forces of the springs 22 is applied to the rod 21 (the regulator parts 24) and the slider 23, the two springs 22 have an equal length that is an equilibrium length or less, and the forces applied to the slider 23 by the two springs 22 balance each other. That is, when no force other than the forces of the springs 22 is applied to the rod 21 (the regulator parts 24) and the slider 23, each of the two springs 22 is slightly compressed between the slider 23 and the regulator part 24, and the two springs 22 have an equal elastic force.

The rod 21 of the first reaction force generator 20 configured in this manner moves to the right when the first control member 12 rotates to the left (counterclockwise in FIG. 4). Then, the left spring 22 is pushed to the right in FIG. 8 and compressed (displaced) by the regulator part 24 unless the slider 23 moves. At this time, when a distance between the right regulator part 24 and the slider 23 exceeds the equilibrium length of the spring 22, the right regulator part 24 separates from the right spring 22, and the length of the right spring 22 returns to the equilibrium length.

The rod 21 of the first reaction force generator 20 moves to the left when the first control member 12 rotates to the right (clockwise in FIG. 4). Then, the right spring 22 is pushed to the left in FIG. 8 and compressed (displaced) by the regulator part 24 unless the slider 23 moves. At this time, when a distance between the left regulator part 24 and the slider 23 exceeds the equilibrium length of the spring 22, the left regulator part 24 separates from the left spring 22, and the length of the left spring 22 returns to the equilibrium length. Thus, the elastic force of the compressed spring 22 is generated as a reaction force to the operation of the first control member 12. The reaction force to the operation of the first control member 12 can be regarded as a reaction force to the operation of the control stick 10.

The second reaction force generator 50 has a second spring that is connected to the lower end of the second control member 13 and is displaced by the rotation of the second control member 13 to generate a reaction force to the operation of the second control member 13. The second reaction force generator 50 is configured basically in the same manner as the first reaction force generator 20. Specifically, as shown in FIG. 8, the second reaction force generator 50 has a rod 51, two springs 52, and a slider 53. The springs 52 correspond to the second spring. Features different from the first reaction force generator 20 will be described below. FIG. 8 shows the second reaction force generator 50 as viewed from the right side of the housing 1.

The rod 51 is a second rod that is connected to the second control member 13 and displaces the two springs 52, which are attached to the rod to be displaceable in an axial direction of the rod, by the rotation of the second control member 13. The rod 51 is a linear member extending in the front-rear direction. One end of the rod 51 (a left end in FIG. 8) is connected to the lower end of the second control member 13 by a connecting pin 57. The other end of the rod 51 (a right end in FIG. 8) is a free end.

The two springs 52 are wrapped around the outer periphery of the rod 51. The two springs 52 are displaceable in the axial direction of the rod 51. That is, the springs 52 of the second reaction force generator 50 are displaced to the front and rear. The two springs 52 are also compression springs, as are the springs 22 of the first reaction force generator 20.

The slider 53 is configured in the same manner as the slider 23 of the first reaction force generator 20. Specifically, the slider 53 is a second slider that is attached to the rod 51 to be movable in the axial direction of the rod 51 (to the front and rear). The slider 53 is slidable in the axial direction of the rod 51 and is located between the two springs 52.

The rod 51 has two regulator parts 54 each regulates the position of the spring 52. The regulator parts 54 are configured in the same manner as the regulator parts 24 of the first reaction force generator 20. That is, each regulator part 54 is arranged across the corresponding spring 52 from the slider 53. Each of the two springs 52 of the second reaction force generator 50 is in contact with the slider 53 at one end and the regulator part 54 at the other end. Specifically, when no force other than the forces of the springs 52 is applied to the rod 51 (the regulator parts 54) and the slider 53, the two springs 52 have an equal length that is an equilibrium length or less, and the forces applied to the slider 53 by the two springs 52 balance each other. That is, when no force other than the forces of the springs 52 is applied to the rod 51 (the regulator parts 54) and the slider 53, each of the two springs 52 is slightly compressed between the slider 53 and the regulator part 54, and the two springs 52 have an equal elastic force.

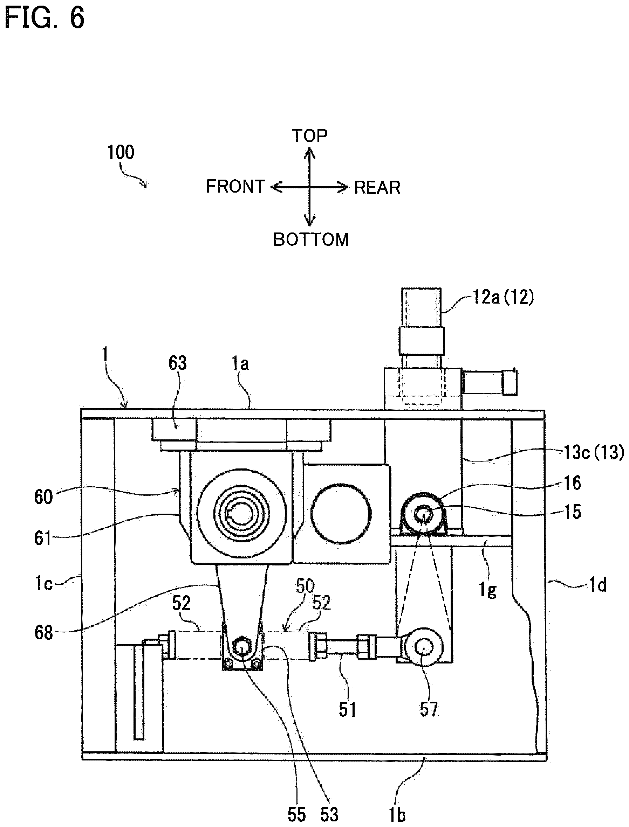

The rod 51 of the second reaction force generator 50 configured in this manner moves to the rear when the second control member 13 rotates to the front (counterclockwise in FIG. 6). Then, the right spring 52 is pushed to the left in FIG. 8 and compressed (displaced) by the regulator part 54 unless the slider 53 moves. At this time, when a distance between the left regulator part 54 and the slider 53 exceeds the equilibrium length of the spring 52, the left regulator part 54 separates from the left spring 52, and the length of the left spring 52 returns to the equilibrium length.

The rod 51 of the second reaction force generator 50 moves to the front when the second control member 13 rotates to the rear (clockwise in FIG. 6). Then, the left spring 52 is pushed to the right in FIG. 8 and compressed (displaced) by the regulator part 54 unless the slider 53 moves. At this time, when a distance between the right regulator part 54 and the slider 53 exceeds the equilibrium length of the spring 52, the right regulator part 54 separates from the right spring 52, and the length of the right spring 52 returns to the equilibrium length. Thus, the elastic force of the compressed spring 52 is generated as a reaction force to the operation of the second control member 13. The reaction force to the operation of the second control member 13 can be regarded as a reaction force to the operation of the control stick 10.

The reaction forces to the operations of the first and second control members 12 and 13 generated in this manner can give a trainee a feeling similar to the actual navigation during the simulated training.

The first neutral position changer 30 has a first actuator that displaces the springs 22 (the first spring) to reduce the reaction force to the operation of the first control member 12 to zero, thereby changing the neutral position of the first control member 12. When the first control member 12 is in the neutral position, all external forces, such as an aerodynamic force around the pitching axis applied to the airframe and an output of an engine, balance each other. This position may be referred to as a pitch trim position. Specifically, when the first control member 12 is in the neutral position, the force operating the first control member 12 (i.e., the force operating the control stick 10) is zero, and the reaction force to the operation of the first control member 12 (i.e., the reaction force to the operation of the control stick 10) is also zero. This is true for the neutral position of the second control member 13.

Specifically, the first neutral position changer 30 includes a motor 31 (a first motor), a clutch 34 (a first clutch), a drive shaft 35 (a first drive shaft), and a torque arm 38 (a first torque arm). Each of the motor 31 and the clutch 34 corresponds to the first actuator.

The motor 31 is, for example, an electric motor, a hydraulic motor, an electric motor with a speed reducer, or a hydraulic motor with a speed reducer. The motor 31 of this embodiment is an electric motor with a speed reducer.

An output shaft 32 of the motor 31 is located below the first reaction force generator 20. The motor 31 is attached to the bottom plate 1b of the housing 1. Specifically, the motor 31 has a base 33 at the bottom, and the base 33 is bolted to the bottom plate 1b. The motor 31 is arranged with the output shaft 32 pointed to the rear (to the rear plate 1d). That is, the axial center of the output shaft 32 of the motor 31 extends in the front-rear direction. The motor 31 is located forward and rightward of the first control member 12 in the housing 1.

A vertical distance between the first rotation shaft 14 of the first control member 12 and the rod 21 is equal to a vertical distance between the output shaft 32 of the motor 31 and the rod 21 so that a rotation angle of the output shaft 32 of the motor 31 matches with a rotation angle of the first control member 12. Note that the vertical distance between the first rotation shaft 14 of the first control member 12 and the rod 21 may be different from the vertical distance between the output shaft 32 of the motor 31 and the rod 21.

The clutch 34 is connected to the output shaft 32 of the motor 31. The drive shaft 35 is connected to the clutch 34. That is, the clutch 34 is connected between the motor 31 and the drive shaft 35. An end of the drive shaft 35 opposite to the clutch 34 is rotatably supported by a bearing unit 36. The output shaft 32 of the motor 31, the clutch 34, and the drive shaft 35 are coaxial with each other. The clutch 34 engages and disengages the transmission of power from the motor 31 to the drive shaft 35.

Thus, the clutch 34 is switchable between a transmitting state and a blocking state. In the transmitting state, the output shaft 32 and the drive shaft 35 are connected, and the power of the motor 31 is transmitted to the drive shaft 35. In the blocking state, the output shaft 32 and the drive shaft 35 are disconnected, and no power of the motor 31 is transmitted to the drive shaft 35. The drive shaft 35 is released (unrestrained) in the blocking state. The clutch 34 may be, for example, an electromagnetic clutch, a mechanical clutch, a hydraulic clutch, or a pneumatic clutch. The clutch 34 of the present embodiment is an electromagnetic clutch.

The clutch 34 is attached to the bottom plate 1b of the housing 1. Specifically, an attachment 37 is arranged on the bottom plate 1b to correspond to the clutch 34 (see FIG. 5). The attachment 37 is a plate member extending in the vertical direction, and is fixed to the bottom plate 1b. That is, the attachment 37 is arranged perpendicular to the bottom plate 1b. The clutch 34 is bolted to the attachment 37. The clutch 34 is attached to the bottom plate 1b via the attachment 37.

The torque arm 38 is fixed to the drive shaft 35 and rotates together with the drive shaft 35. That is, the drive shaft 35 is connected to the motor 31 via the clutch 34 and is coupled to the torque arm 38. The torque arm 38 extends upward from the drive shaft 35 (from the bottom plate 1b) to be connected to the first reaction force generator 20 and moves the slider 23 when the torque arm 38 is driven to rotate by the motor 31.

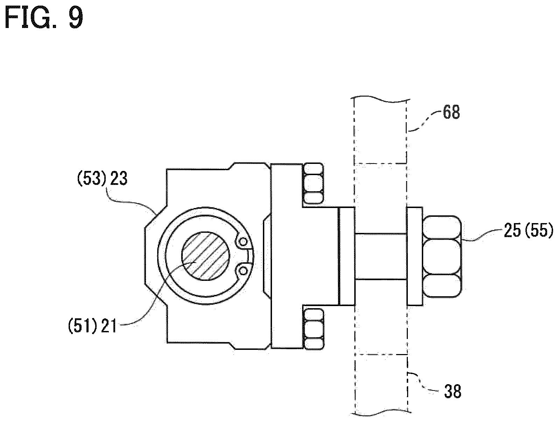

More specifically, the torque arm 38 is connected to the slider 23 of the first reaction force generator 20 as shown in FIG. 9. The slider 23 has a shaft 25, to which the torque arm 38 is rotatably connected. In the present embodiment, the shaft 25 is a bolt shaft. When rotated by the rotation of the drive shaft 35, the torque arm 38 moves (displaces) the slider 23 of the first reaction force generator 20 along the rod 21.

The second neutral position changer 60 has a second actuator that displaces the springs 52 (the second spring) to reduce the reaction force to the operation of the second control member 13 to zero, thereby changing the neutral position of the second control member 13. When the second control member 13 is in the neutral position, all external forces, such as an aerodynamic force around the rolling axis applied to the airframe and an output of an engine, balance each other. This position may be referred to as a roll trim position. The second neutral position changer 60 is configured basically in the same manner as the first neutral position changer 30. Specifically, the second neutral position changer 60 includes a motor 61 (a second motor), a clutch 64 (a second clutch), a drive shaft 65 (a second drive shaft), and a torque arm 68 (a second torque arm). Each of the motor 61 and the clutch 64 corresponds to the second actuator. Features different from the first neutral position changer 30 will be described below.

An output shaft 62 of the motor 61 is located above the second reaction force generator 50. The motor 61 is an electric motor with a speed reducer, as is the motor of the first neutral position changer 30. The motor 61 is attached to the top plate 1a of the housing 1. Specifically, the motor 61 has a base 63 at the top, and the base 63 is bolted to the top plate 1a. The motor 61 is arranged with the output shaft 62 pointed to the right (to the right plate 1e). That is, the axial center of the output shaft 62 of the motor 61 extends in the left-right direction. The motor 61 is located forward and leftward of the second control member 13 in the housing 1.

The clutch 64 is connected to the output shaft 62 of the motor 61. The drive shaft 65 is connected to the clutch 64. An end of the drive shaft 65 opposite to the clutch 64 is rotatably supported by a bearing unit 66. The output shaft 62 of the motor 61, the clutch 64, and the drive shaft 65 are coaxial with each other.

Thus, the clutch 64 is switchable between a transmitting state and a blocking state, as is the clutch of the first neutral position changer 30. In the transmitting state, the output shaft 62 and the drive shaft 65 are connected, and the power of the motor 61 is transmitted to the drive shaft 65. In the blocking state, the output shaft 62 and the drive shaft 65 are disconnected, and no power of the motor 61 is transmitted to the drive shaft 65. The drive shaft 65 is released (unrestrained) in the blocking state. The clutch 64 is an electromagnetic clutch, as is the clutch of the first neutral position changer 30.

The clutch 64 is attached to the top plate 1a of the housing 1. Specifically, an attachment 67 is arranged on the top plate 1a to correspond to the clutch 64 (see FIG. 4). The attachment 67 is a plate member extending in the vertical direction and is fixed to the top plate 1a. That is, the attachment 67 is arranged perpendicular to the top plate 1a. The clutch 64 is bolted to the attachment 67. The clutch 64 is attached to the top plate 1a via the attachment 67.

The torque arm 68 is fixed to the drive shaft 65 and rotates together with the drive shaft 65. That is, the drive shaft 65 is connected to the motor 61 via the clutch 64 and is coupled to the torque arm 68. The torque arm 68 extends downward from the drive shaft 65 (from the top plate 1a) to be connected to the second reaction force generator 50 and moves the slider 53 when the torque arm 68 is driven to rotate by the motor 61.

More specifically, the torque arm 68 is connected to the slider 53 of the second reaction force generator 50 as shown in FIG. 9. The torque arm 68 and the slider 53 are connected in the same manner, as are the torque arm and slider of the first neutral position changer 30. Thus, the torque arm 68 is rotatably connected to a shaft 55 of the slider 53. When rotated by the rotation of the drive shaft 65, the torque arm 68 moves (displaces) the slider 53 of the second reaction force generator 50 along the rod 51.

The first and second neutral position changers 30 and 60 can perform a neutral position change operation in two change modes, namely, a "normal change mode" and a "quick change mode."

In the "normal change mode," the motors 31 and 61 are driven to change the neutral position relatively slowly. This change operation is generally called a beep trim. In the "quick change mode," the clutches 34 and 64 are switched to the blocking state to quickly change the neutral position. This change operation is generally called a force trim release (FTR). The operating switch 11a is used to make a selection from the two change modes.

The first and second neutral position changers 30 and 30 run in the two change modes in the same manner, and thus, the first neutral position changer 30 in the "normal change mode" and the "quick change mode" will be described below as an example. In the following description, the "directions" related to the springs 22, the slider 23, and the torque arm 38 are the directions in FIG. 8.

When the pilot or any equivalent operator holding the control stick 10 (operating part 11) presses the operating switch 11a to shift the neutral position to the left in the "normal change mode," the motor 31 is driven, for example, at a constant speed, and the torque arm 38 is rotated clockwise. The slider 23 moves to the right by the rotation of the torque arm 38. The first control member 12 and the rod 21 (the regulator parts 24) are not displaced because the control stick 10 is held by the pilot or any equivalent operator. Then, the slider 23 moves to compress the spring 22 on the right of the slider 23 and stretches the spring 22 on the left of the slider 2. As a result, the difference in elastic force between the right and left springs 22 applies a rightward reaction force to the rod 21, and thus, the reaction force to the operation is transmitted to the pilot or any equivalent operator. When the pilot or any equivalent operator loosens the grip on the control stick 10 in this state, the control stick 10 (the first control member 12) is tilted to the left by the reaction force to the operation. The position of the first control member 12 when the grip by the pilot or any equivalent operator is reduced to zero (i.e., when the reaction force to the operation of the first control member 12 is reduced to zero) will be a new neutral position. Thus, the neutral position of the first control member 12 is changed. The clutch 34 is of course kept in the blocking state in the "normal change mode."

When the pilot or any equivalent operator holding the control stick 10 (operating part 11) presses the operating switch 11a to shift the neutral position to the right in the "normal change mode," the motor 31 is driven, and the torque arm 38 is rotated counterclockwise. The slider 23 moves to the left by the rotation of the torque arm 38. The first control member 12 and the rod 21 (the regulator parts 24) are not displaced because the control stick 10 is held by the pilot or any equivalent operator. Then, the slider 23 moves to compress the spring 22 on the left of the slider 23 and stretches the spring 22 on the right of the slider 2. As a result, the difference in elastic force between the right and left springs 22 applies a leftward reaction force to the rod 21, and thus, the reaction force to the operation is transmitted to the pilot or any equivalent operator. When the pilot or any equivalent operator loosens the grip on the control stick 10 in this state, the control stick 10 (the first control member 12) is tilted to the right by the reaction force to the operation. The position of the first control member 12 when the grip by the pilot or any equivalent operator is reduced to zero (i.e., when the reaction force to the operation of the first control member 12 is reduced to zero) will be a new neutral position. Thus, in the "normal change mode," the motor 31 moves the slider 23 to a position where the elastic forces of the two springs 22 balance each other, thereby displacing the springs 22.

Then, when the operating switch 11a corresponding to the "quick change mode" is pressed once, for example, while the first control member 12 is being tilted to the left, the clutch 34 is switched from the transmitting state to the blocking state. Then, the output shaft 32 of the motor 31 and the drive shaft 35 are disconnected, and the drive shaft 35 is released (unrestrained). The torque arm 38 is also released. Then, the restoring force (elastic force) of the left spring 22 in a compressed state pushes the slider 23 to the right. At this time, the slider 23 instantly moves to the right with no resistance because the torque arm 38 is released, and the torque arm 38 is instantly rotated clockwise. Thus, in the "quick change mode," the clutch 34 is switched to the blocking state to instantly move the slider 23 to the position where the elastic forces of the two springs 22 applied to the slider 23 balance each other. When the elastic forces of the springs 22 balance each other, the slider 23 stops moving and the torque arm 38 stops rotating. When the operating switch 11a corresponding to the "quick change mode" is released in this state, the clutch 34 is switched to the transmitting state. The position of the first control member 12 at this time will be a new neutral position. Thus, the neutral position of the first control member 12 is quickly changed.

When the operating switch 11a corresponding to the "quick change mode" is pressed while the first control member 12 is being tilted to the right, the clutch 34 is switched from the transmitting state to the blocking state. Then, the drive shaft 35 and the torque arm 38 are released, and the restoring force (elastic force) of the right spring 22 in a compressed state pushes the slider 23 to the left. At this time, the slider 23 instantly moves to the left with no resistance because the torque arm 38 is released, and the torque arm 38 is instantly rotated counterclockwise. When the elastic forces of the springs 22 balance each other, the slider 23 stops moving and the torque arm 38 stops rotating. When the operating switch 11a corresponding to the "quick change mode" is released in this state, the clutch 34 is switched to the transmitting state. The position of the first control member 12 at this time will be a new neutral position. The neutral position of the first control member 12 is quickly changed also in this case. Thus, in the "quick change mode," the clutch 34 moves the slider 23 to the position where the elastic forces of the two springs 22 balance each other, thereby displacing the springs 22.

In the "quick change mode," the slider 23 instantly moves under the restoring force of the spring 22. This may cause an overshoot phenomenon, i.e., the slider 23 may possibly move beyond a position that will be the neutral position. Such an overshoot phenomenon is undesirable for the operation of the control stick 10. Thus, the simulator 100 of the present embodiment further includes a first hydraulic damper 40 and a second hydraulic damper 70 that keep the moving speeds of the rods 21 and 51 of the reaction force generators 20 and 50 from increasing too much.

The hydraulic damper 40 has a cylinder 41 and a piston rod 42, and the hydraulic damper 70 has a cylinder 71 and a piston rod 72. The first hydraulic damper 40 is arranged parallel to the rod 21 of the first reaction force generator 20, and the piston rod 42 is connected to the lower end of the first control member 12 by a connecting pin 27. The second hydraulic damper 70 is arranged parallel to the rod 51 of the second reaction force generator 50, and the piston rod 72 is connected to the lower end of the second control member 13 by a connecting pin 57. The hydraulic dampers 40 and 70 keep the rods 21 and 51 from moving at an excessive speed via the connecting pins 27 and 57.

As described above, the flight simulation control apparatus 100 includes the housing 1. The housing 1 contains the control stick 10, the first reaction force generator 20, the second reaction force generator 50, the first neutral position changer 30, and the second neutral position changer 60. The control stick 10 has the first control member 12 that extends in the vertical direction and is rotatable about the first rotation shaft 14 (the first horizontal axis) and the second control member 13 that extends in the vertical direction and is rotatable about the second rotation shaft 15 located below the first rotation axis 14 and perpendicular to the first rotation axis 14. The first reaction force generator 20 has the springs 22 (the first spring) that are connected to the first control member 12 and are displaced by the rotation of the first control member 12 to generate the reaction force to the operation of the first control member 12. The second reaction force generator 50 has the springs 52 (the second spring) that are connected to the second control member 13 and are displaced by the rotation of the second control member 13 to generate the reaction force to the operation of the second control member 13. The first neutral position changer 30 has the first actuator (the motor 31 and the clutch 34) that displaces the springs 22 (the first spring) to reduce the reaction force to the operation of the first control member 12 to zero, thereby changing the neutral position of the first control member 12. The second neutral position changer 60 has the second actuator (the motor 61 and the clutch 64) that displaces the springs 52 (the second spring) to reduce the reaction force to the operation of the second control member 13 to zero, thereby changing the neutral position of the second control member 13. The output shaft of the first actuator (the output shaft 32 of the motor 31) is located below the first reaction force generator 20, and the output shaft of the second actuator (the output shaft 62 of the motor 61) is located above the second reaction force generator 50.

In this configuration, the first control member 12 has a center of rotation (the first rotation shaft 14) at a relatively high position, and the first reaction force generator 20 connected to the first control member 12 is located relatively high in the housing 1. This can easily provide a space for the first actuator below the first reaction force generator 20. Thus, the output shaft of the first actuator can be located below the first reaction force generator 20 with an enough room left. On the other hand, the second control member 13 has a center of rotation (the second rotation shaft 15) at a low position, and the second reaction force generator 50 connected to the lower end of the second control member 13 is located relatively low in the housing 1. Thus, the second actuator cannot be easily arranged in a space below the second reaction force generator 50 unless the housing 1 is made taller. In the present embodiment, the output shaft of the second actuator is located above the second reaction force generator 50. That is, the second reaction force generator 50 is located low, providing a relatively large free space above the second reaction force generator 50. Thus, the output shaft of the second actuator is located above the second reaction force generator 50, allowing the second actuator to be placed in the free space with an enough room left. This can make the housing 1 shorter, reducing the size of the simulator 100.

More specifically, the first actuator (the motor 31 and the clutch 34) is attached to the bottom plate 1b of the housing 1, and the second actuator (the motor 61 and the clutch 64) is attached to the top plate 1a of the housing 1. The top plate 1a and the bottom plate 1b are strength members, allowing firm placement of the first and second actuators.

The first and second actuators are the motors 31 and 61 (the first and second motors). The first neutral position changer 30 further includes the torque arm 38 (the first torque arm) that extends upward from the bottom plate 1b of the housing 1 to be connected to the slider 23 (the first slider) and moves the slider 23 when the torque arm 38 is driven to rotate by the output shaft 32 of the motor 31. The second neutral position changer 60 further includes the torque arm 68 (the second torque arm) that extends downward from the top plate 1a of the housing 1 to be connected to the slider 53 (the second slider) and moves the slider 53 when the torque arm 68 is driven to rotate by the output shaft 62 of the motor 61.

This configuration allows the motor 61, which is relatively bulky, to be placed in a free space above the second reaction force generator 50.

The flight simulation control apparatus 100 further includes the clutch 34 (the first clutch) as the first actuator and the clutch 64 (the second clutch) as the second actuator. The first neutral position changer 30 further includes the drive shaft 35 (the first drive shaft) connected to the output shaft 32 of the motor 31 via the clutch 34 and is coupled to the torque arm 38. The torque arm 38 rotates under the restoring force of the springs 22 to move the slider 23 when the clutch 34 disconnects the output shaft 32 of the motor 31 and the drive shaft 35. The second neutral position changer 60 further includes the drive shaft 65 (the second drive shaft) connected to the output shaft 62 of the motor 61 via the clutch 64 and is coupled to the torque arm 68. The torque arm 68 rotates under the restoring force of the springs 52 to move the slider 53 when the clutch 64 disconnects the output shaft 62 of the motor 61 and the drive shaft 65.

This configuration can provide two modes of the neutral position change operation, namely, a change operation by the drive of the motors 31 and 61 (normal change mode) and a change operation by the switching of the clutches 34 and 64 to the blocking state (quick change mode). Also in this case, both of the motor 61 and the clutch 64 can be attached to the top plate 1a using the free space above the second reaction force generator 50.

### (Other Embodiments)

The embodiment has been described above as an example of the technique disclosed in the present application. However, the present disclosure is not limited to this exemplary embodiment, but is also applicable to other embodiments which are altered or substituted, to which other features are added, or from which some features are omitted, as needed. The components described in the embodiment may be combined to create a new embodiment. The components illustrated on the accompanying drawings and described in the detailed description include not only essential components that need to be used to overcome the problem, but also other unessential components that do not have to be used to overcome the problem. Therefore, such unessential components should not be taken for essential ones, simply because such unessential components are illustrated in the drawings or mentioned in the detailed description.

For example, the simulator 100 is applicable to a flight simulation control apparatus for the other aircrafts than the helicopter.

The neutral position changer 30 may include the motor 31 only as the first actuator, and the neutral position changer 60 may include the motor 61 only as the second actuator. In this case, for example, the output shaft 32 of the motor 31 or the output shaft 62 of the motor 61 is connected to the torque arm 38 or 68. The neutral position change operation is performed in the "normal change mode" only.

The neutral position changer 30 may include a first brake as the first actuator in place of the motor 31 and the clutch 34, and the neutral position changer 60 may include a second brake in place of the motor 61 and the clutch 64. In this case, the torque arm of the first neutral position changer 30 extends upward from the bottom plate 1b of the housing 1 to be connected to the slider 23 (the first slider). The torque arm restrains the slider 23 when the first brake keeps the torque arm from rotating, and rotates under the restoring force of the spring 22 (the first spring) to move the slider 23 when the first brake frees the torque arm. The torque arm of the second neutral position changer 60 extends downward from the top plate 1a of the housing 1 to be connected to the slider 53 (the second slider). The torque arm restrains the slider 53 when the second brake keeps the torque arm from rotating, and rotates under the restoring force of the spring 52 (the second spring) to move the slider 53 when the second brake frees the torque arm. Specifically, the first and second brakes are respectively provided in the positions of the clutches 34 and 64 of the above-described embodiment. The first brake is connected to the drive shaft 35, and the second brake is connected to the drive shaft 65. The motors 31 and 61 and the clutches 34 and 64 are omitted. In this example, the neutral position change operation is performed in the "quick change mode" only.

How the motors 31 and 61 and the clutches 34 and 64 are supported is not limited to the example described in the embodiment. For example, the motor 31 and the clutch 34 may be supported on the top plate 1a of the housing 1, and the motor 61 and the clutch 64 may be supported on the bottom plate 1b of the housing 1.

The simulator 100 of the embodiment and another simulator 100 may be arranged side by side in the left-right direction. This configuration allows the pilot and the copilot to attend the simulated training simultaneously.

### DESCRIPTION OF REFERENCE CHARACTERS

100 Simulator
1 Housing
1a Top plate
1b Bottom plate
10 Control stick
12 First control member
13 Second control member
14 First rotation shaft (first horizontal axis)
15 Second rotation shaft (second horizontal axis)
20 First reaction force generator
21 Rod (first rod)
22 Spring (first spring)
23 Slider (first slider)
30 First neutral position changer
31 Motor (first actuator)
32 Output shaft
34 Clutch (first actuator)
35 Drive shaft (first drive shaft)
38 Torque arm (first torque arm)
50 Second reaction force generator
51 Rod (second rod)
52 Spring (second spring)
53 Slider (second slider)
60 Second neutral position changer
61 Motor (second actuator)
62 Output shaft
64 Clutch (second actuator)
65 Drive shaft (second drive shaft)
68 Torque arm (second torque arm)

## Claims

1. A flight simulation control apparatus comprising a housing, the housing containing:
a control stick having a first control member that extends in a vertical direction and is rotatable about a first horizontal axis and a second control member that extends in the vertical direction and is rotatable about a second horizontal axis located below the first horizontal axis and perpendicular to the first horizontal axis;
a first reaction force generator having a first spring that is connected to the first control member and is displaced by rotation of the first control member to generate a reaction force to an operation of the first control member;
a second reaction force generator having a second spring that is connected to the second control member and is displaced by rotation of the second control member to generate a reaction force to an operation of the second control member;
a first neutral position changer having a first actuator that displaces the first spring to reduce the reaction force to the operation of the first control member to zero, thereby changing a neutral position of the first control member; and
a second neutral position changer having a second actuator that displaces the second spring to reduce the reaction force to the operation of the second control member to zero, thereby changing a neutral position of the second control member, wherein
an output shaft of the first actuator is located below the first reaction force generator, and
an output shaft of the second actuator is located above the second reaction force generator.

2. The flight simulation control apparatus of claim 1, wherein
the first actuator is attached to a bottom plate of the housing, and
the second actuator is attached to a top plate of the housing.

3. The flight simulation control apparatus of claim 1 or 2, wherein
the first reaction force generator further includes: a first rod that is connected to the first control member and displaces the first spring, which includes two first springs attached to the first rod to be displaceable in an axial direction of the first rod, by rotation of the first control member; and a first slider that is attached to the first rod to be movable in the axial direction of the first rod between the two first springs,
the second reaction force generator further includes: a second rod that is connected to the second control member and displaces the second spring, which includes two second springs attached to the second rod to be displaceable in an axial direction of the second rod, by rotation of the second control member; and a second slider that is attached to the second rod to be movable in the axial direction of the second rod between the two second springs,
the first actuator moves the first slider to a position where elastic forces of the two first springs balance each other to displace the first springs, and
the second actuator moves the second slider to a position where elastic forces of the two second springs balance each other to displace the second springs.

4. The flight simulation control apparatus of claim 3, wherein
the first actuator is a first motor, and the second actuator is a second motor,
the first neutral position changer further includes a first torque arm that extends upward from a bottom plate side of the housing to be connected to the first slider and moves the first slider when the first torque arm is driven to rotate by an output shaft of the first motor, and
the second neutral position changer further includes a second torque arm that extends downward from a top plate side of the housing to be connected to the second slider and moves the second slider when the second torque arm is driven to rotate by an output shaft of the second motor.

5. The flight simulation control apparatus of claim 4, wherein
the first actuator includes the first motor and a first clutch,
the second actuator includes the second motor and a second clutch,
the first neutral position changer further includes a first drive shaft that is connected to the output shaft of the first motor via the first clutch and is coupled to the first torque arm, the first torque arm rotating under a restoring force of the first spring to move the first slider when the first clutch disconnects the output shaft of the first motor and the first drive shaft,
the second neutral position changer further includes a second drive shaft that is connected to the output shaft of the second motor via the second clutch and is coupled to the second torque arm, the second torque arm rotating under a restoring force of the second spring to move the second slider when the second clutch disconnects the output shaft of the second motor and the second drive shaft.

6. The flight simulation control apparatus of claim 3, wherein
the first actuator is a first brake, and the second actuator is a second brake,
the first neutral position changer further includes a first torque arm that extends upward from a bottom plate side of the housing to be connected to the first slider, restrains the first slider when the first brake keeps the first torque arm from rotating, and rotates under a restoring force of the first spring to move the first slider when the first brake frees the first torque arm, and
the second neutral position changer further includes a second torque arm that extends downward from a top plate side of the housing to be connected to the second slider, restrains the second slider when the second brake keeps the second torque arm from rotating, and rotates under a restoring force of the second spring to move the second slider when the second brake frees the second torque arm.
